# EUROPEAN PATENT APPLICATION

(11) **EP 4 319 349 A1**
(43) Date of publication of application: **07.02.2024**
(21) Application number: 22779078.9
(22) Date of filing: 31.03.2022
(51) Int. Cl.: H04W 68/00

(54) **PAGING METHOD AND APPARATUS, TERMINAL, AND NETWORK SIDE DEVICE**

(30) Priority: 01.04.2021 CN 202110357971
(71) Applicant: Vivo Mobile Communication Co., Ltd., Dongguan, Guangdong 523863 (CN)
(72) Inventor: BAO, Wei, Dongguan, Guangdong 523863 (CN); LIU, Jinhua, Dongguan, Guangdong 523863 (CN)
(74) Representative: Murgitroyd & Company
(86) International application number: PCT/CN2022/084431
(87) International publication number: WO 2022/206898

(57) **Abstract**

This application discloses a paging method and apparatus, a terminal, and a network side device, and belongs to the field of communication technologies. The paging method in the embodiments of this application includes: a terminal receives a paging message, where the paging message carries or does not carry paging cause indication information, where the paging cause indication information indicates a paging cause corresponding to a paged terminal that needs or supports receiving of a paging cause; and the terminal performs a first operation based on the paging message.

## Description

### CROSS-REFERENCE TO RELATED APPLICATIONS

This application claims priority to Chinese Patent Application No. 202110357971.1, entitled "PAGING METHOD AND APPARATUS, TERMINAL, AND NETWORK SIDE DEVICE" and filed on April 1, 2021, which is incorporated herein by reference in its entirety.

### TECHNICAL FIELD

This application belongs to the field of communication technologies, and in specifically, relates to a paging method and apparatus, a terminal, and a network side device.

### BACKGROUND

For a multi-SIM device (multi-SIM device), a dual-SIM device is used as an example below. If a card 1 is in communication, and a card 2 is paged suddenly, at present, some dual-SIM devices disconnect communication of the card 1, to respond paging of the card 2. However, in a case that a service type that triggers the paging of the card 2 is unknown, the communication of the card 1 is disconnected to respond the paging of the card 2 may cause more loss than gains. For example, the card 1 is used for playing a game, and the paging of the card 2 is triggered by a message. The game of the card 1 is stopped to receive the message of the card 2, causing poor user experience.

Therefore, in Rel-17, 3GPP determines to carry a paging cause paging cause in a paging message, for a user equipment (User Equipment, UE) to determine whether to respond the paging message sent by a network (Network, NW) side according to the paging cause. However, only some UEs need to receive the paging cause, and some UEs do not need to receive the paging cause, for example, a UE does not supporting the paging cause, and only one UE entity works in the multi-SIM device.

In the related art, whether a UE supports or needs a paging cause in an air interface is not considered. For a UE that does not support or does not need a paging cause in an air interface, if the paging cause is carried in the air interface during paging, unnecessary signaling overhead is caused.

### SUMMARY

Embodiments of this application provide a paging method and apparatus, a terminal, and a network side device, which can resolve a problem that whether a UE supports or needs a paging cause in an air interface is not considered in the related art, and a paging message carrying the paging cause causes much signaling overhead.

According to a first aspect, a paging method is provided and applied to a terminal. The method includes the following steps.

The terminal receives a paging message, where the paging message carries or does not carry paging cause indication information, where the paging cause indication information indicates a paging cause corresponding to a paged terminal that needs or supports receiving of a paging cause; and
the terminal performs a first operation based on the paging message.

According to a second aspect, a paging method is provided and applied to a network side device. The method includes the following:
the network side device sends a paging message to a terminal, where the paging carries or does not carry paging cause indication information, where the paging cause indication information indicates a paging cause corresponding to a paged terminal that needs or supports receiving of a paging cause.

According to a third aspect, a paging apparatus is provided, including:
a first receiving unit, configured to receive a paging message, where the paging message carries or does not carry paging cause indication information, where the paging cause indication information indicates a paging cause corresponding to a paged terminal that needs or supports receiving of a paging cause; and
a first processing unit, configured to perform a first operation based on the paging message.

According to a fourth aspect, a paging apparatus is provided, including:
a second sending unit, configured to send a paging message to a terminal, where the paging message carries or does not carry paging cause indication information, where the paging cause indication information indicates a paging cause corresponding to a paged terminal that needs or supports receiving of a paging cause.

According to a fifth aspect, a terminal is provided. The terminal includes a processor, a memory, and a program or instructions stored in the memory and runnable on the processor, where when the program or the instructions are executed by the processor, the steps of the method described in the first aspect are implemented.

According to a sixth aspect, a terminal is provided, including a processor and a communication interface, where the communication interface is configured to receive a paging message, and the paging message carries or does not carry paging cause indication information, where the paging cause indication information indicates a paging cause corresponding to a paged terminal that needs or supports receiving of a paging cause; and the processor is configured to perform a first operation based on the paging message.

According to a seventh aspect, a network side device is provided. The network side device includes a processor, a memory, and a program or instructions stored in the memory and runnable on the processor, where when the program or instructions are executed by the processor, the steps of the paging method described in the second aspect are implemented.

According to an eighth, a network side device is provided, including a processor and a communication interface, where the communication interface is configured to send a paging message to a terminal, and the paging message carries or does not carry paging cause indication information, where the paging cause indication information indicates a paging cause corresponding to a paged terminal that needs or supports receiving of a paging cause.

According to a ninth aspect, a readable storage medium is provided. The readable storage medium stores a program or instructions, where when the program or instructions are executed by a processor, the steps of the paging method described in the first aspect are implemented or the steps of the paging method described in the second aspect are implemented.

According to a tenth aspect, a chip is provided. The chip includes a processor and a communication interface. The communication is coupled to the processor, the processor is configured to run a program or instructions, and the paging method described in the first aspect is implemented, or the paging method described in the second aspect is implemented.

According to an eleventh aspect, a computer program/program product is provided. The computer program/program product is stored in a non-volatile storage medium. The program/program product is executed by at least one processor to implement the steps of the paging method described in the first aspect or implement the steps of the paging method described in the second aspect.

In the embodiments of this application, the terminal receives the paging method, where the paging method carries or does not carry paging cause indication information, and the paging cause indication information indicates the paging cause corresponding to the paged terminal that needs or supports receiving of a paging cause; and determines the paging cause based on the paging message, to further determine subsequent behavior. Whether the terminal supports or needs a paging cause in an air interface is considered, effectively reducing signaling overhead.

### BRIEF DESCRIPTION OF THE DRAWINGS

FIG. 1 is a schematic structural diagram of a wireless communication system to which an embodiment of this application is applicable;
FIG. 2 is a schematic flowchart 1 of a paging method according to an embodiment of this application;
FIG. 3 is a schematic flowchart 2 of a paging method according to an embodiment of this application;
FIG. 4 is a schematic structural diagram 1 of a paging apparatus according to an embodiment of this application;
FIG. 5 is a schematic structural diagram 2 of a paging apparatus according to an embodiment of this application;
FIG. 6 is a schematic structural diagram of a communication device according to an embodiment of this application;
FIG. 7 is a schematic structural diagram of a terminal that implements an embodiment of this application; and
FIG. 8 is a schematic structural diagram of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

The terms "first" and "second" in the specification and claims of this application are used to distinguish similar objects, but are not used to describe a specific sequence or order. It may be understood that the terms used in such a way is interchangeable in proper circumstances, so that the embodiments of this application can be implemented in other sequences than the sequence illustrated or described herein. Objects distinguished by the terms "first" and "second" are usually of a type, and a number of the objects are not limited. For example, a first object may be one or more. In addition, "and/or" in the specification and claims represents at least one of the connected objects. The character "/"generally represents an "or" relationship between related objects.

It should be noted that technologies described in the embodiments of this application are not limited to a long term evolution (Long Term Evolution, LTE)/LTE-advanced (LTE-advanced, LTE-A) system, and are applicable to other wireless communication systems, such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and other systems. Terms "system" and "network" are usually be used interchangeably, and the technology described can be applied to the systems and radio technologies mentioned above, and can also be applied to other systems and radio technologies. A New Radio (New Radio, NR) system is described in the following descriptions for illustration, and NR terms are used in most of the following descriptions, but these technologies may be used in application other than NR system application, for example, 6th generation (6th generation, 6G) communication system.

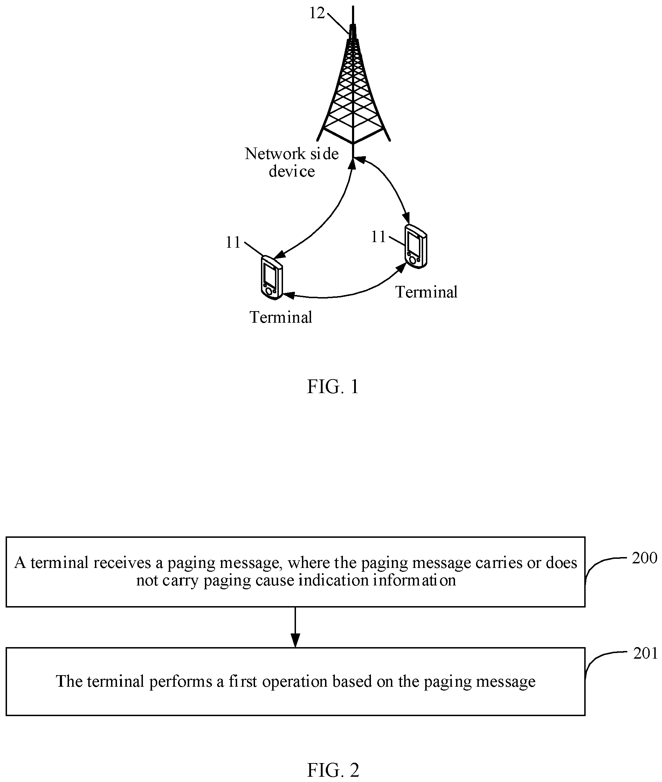

FIG. 1 is a schematic structural diagram of a wireless communication system to which an embodiment of this application is applicable. The wireless communication system includes a terminal 11 and a network side device 12. The terminal 11 may also be referred to as a terminal device or a user equipment (user equipment, UE). The terminal 11 may be a mobile phone, a tablet personal computer (tablet personal computer), a laptop computer (laptop computer) or a notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), a wearable device (wearable device) or an in-vehicle device (VUE), a pedestrian user equipment (PUE), or another terminal side device. Wearable devices include: smartwatches, bands, headsets, glasses, and the like. It should be noted that a specific type of the terminal 11 is not limited in this embodiment of this application. The network side device 12 may be a base station or a core network. The base station may be referred to as a NodeB, an evolved NodeB, an access point, a base transceiver station (base transceiver station, BTS), a radio base station, a radio transceiver, a basic service set (basic service set, BSS), an extended service set (extended service set, ESS), a home NodeB, a home evolved Node B, a WLAN access point, a Wi-Fi node, a transmitting receiving point (Transmitting Receiving Point, TRP), or another proper term in the field. The base station is not limited to a specific technological term, provided that a same technological effect is implemented. It should be noted that, in this embodiment of this application, the base station in the NR system is only used as an example, but a specific type of the base station is not limited.

The paging method provided in an embodiment of this application is described in detail by using some embodiments and application scenarios thereof with reference to accompanying drawings.

FIG. 2 is a schematic flowchart 1 of a paging method according to an embodiment of this application. As shown in FIG. 2, the method includes the following steps.

Step 200: A terminal receives a paging message, where the paging message carries or does not carry paging cause indication information.

Optionally, the terminal receives a paging Paging message sent by a network side device, where the paging message carries or does not carry the paging cause Paging Cause indication information.

The paging cause indication information indicates a paging cause corresponding to a paged terminal that needs or supports receiving of a paging cause. For example, the paging cause indication information indicates that paging is triggered by a voice service (for example, VoNR).

Optionally, that the paging message carries or does not carry the paging cause indication information means that the paging message optionally carries the paging cause indication information.

Optionally, if the network side device does not support sending of a paging cause of the paged terminal, or the paged terminal does not support or need receiving of a paging cause, the paging message does not carry the paging cause indication information of the paged terminal.

Optionally, if the paged terminal supports or needs receiving of a paging cause, and the paging cause of the paged terminal is a paging cause defined in a protocol (for example, a voice service), the paging message carries the paging cause indication information of the paged terminal.

Optionally, if the paged terminal supports or needs receiving of a paging cause, and the paging cause of the paged terminal is not a paging cause defined in a protocol (for example, a non-voice service), the paging message may not carry the paging cause indication information of the paged terminal, but needs to indicate that the paging cause indication information of the paged terminal is not carried.

Optionally, the paging cause indication information may be coding information, for example, code 000 represents a paging cause A, and code 001 represents a paging cause B.

Optionally, the paging cause indication information may be a paging priority. That is, an NW does not send a specific service type triggering paging, but a priority corresponding to a service triggering paging. The priority corresponding to the service triggering paging may be specified in a protocol or negotiated by a UE and an NW, or set by an operator. The paging priority may be a number, for example, 1, 2, ..., and N, and priorities corresponding to N priorities sequentially increase or decrease.

It should be noted that, the paging cause indication information may alternatively be a message for indicating the paging cause in another form.

Step 201: The terminal performs a first operation based on the paging message.

Optionally, the terminal determines, based on the paging message, that the terminal is paged, and further determines whether the paging message carries the paging cause indication information of the terminal. If the paging cause indication information of the terminal can be obtained from the paging message, the paging cause of the terminal is determined according to the paging cause, for the terminal to further determine subsequent behavior.

Optionally, the terminal determines, based on the paging message, that the terminal is paged, and further obtains the paging cause indication information of the terminal based on the paging message. If the paging cause indication information of the terminal cannot be obtained, it is determined that the network side device does not support sending of a paging cause of the terminal.

Optionally, the terminal determines, based on the paging message, that the terminal is not paged.

Optionally, after the terminal determines the paging cause of the terminal, the method further includes the following step:
the terminal responds or does not respond the paging message based on the paging cause.

For example, in a dual-SIM device, a UE 1 is used for playing a game, and in this case, a UE 2 receives a paging indication whose corresponding paging cause is VoNR, the dual-SIM device may select responding the paging indication of the UE 2; or if a UE 2 receives a paging message whose corresponding paging cause is a short message, the dual-SIM device may select ignoring a paging indication of the UE 2 temporarily, for example, connection establishment process is initiated until the game in the UE 1 is finished, to respond the previous paging indication.

Optionally, the terminal is the paged terminal that needs or supports receiving of a paging cause, for example, corresponding to a UE inserted into a dual-SIM terminal, or a UE that reports to the network that the UE needs to receive a paging cause.

In this embodiment of this application, the terminal receives the paging message, where the paging message optionally carries the paging cause indication information, and the paging cause indication information indicates the paging cause corresponding to the paged terminal that needs or supports receiving of a paging cause; and determines the paging cause based on the paging message, to further determine subsequent behavior. Whether the terminal supports or needs a paging cause in an air interface is considered, effectively reducing signaling overhead.

In some optional embodiments, that the paging message carries or does not carry the paging cause indication information includes the following: the paging message carries a first list, or the paging message carries a first list and a second list, where
each entry in the first list includes a first paging ID of a paged terminal, where
each entry in the second list includes paging cause indication information of a paged terminal; and
a sequence of paging cause indication information of the paged terminal in the second list corresponds a sequence of first paging IDs of first M or last M paged terminals in the first list, where M is a total number of entries included in the second list.

In the related art, an air interface paging message carries PagingRecordList, the PagingRecordList includes at least one PagingRecord and at most MaxNrofPageRec PagingRecords, and each PagingRecord carries one paging identifier of a paged UE (UE_Identity). That is, one paging message may indicate at most MaxNrofPageRec paged UEs, some of the UEs support or need receiving of a paging cause, and the remaining of the UEs do not support or need.

Optionally, the first paging ID is a legacy UE ID, such as a fifth generation system temporary mobile subscriber identity (fifth generation system temporary mobile subscriber identity, 5G-S-TMSI), a full inactive radio network temporary identifier (full inactive radio network temporary identifier, full I-RNTI).

It can be understood that the first list indicates the first paging identifier ID of the paged terminal, the first list includes a plurality of entries, and each entry in the first list includes a first paging ID of a paged terminal.

Optionally, the first list is PagingRecordList.

Different from an existing paging message, in this embodiment of this application, the paging message carries the first list, that is the PagingRecordList, and optionally carries the second list.

The second list includes a plurality of entries, and each entry in the second list includes paging cause indication information of a paged terminal. The paging cause indication information is optionally carried.

The second list includes M entries, that is, a length of the second list is M, representing that the network side device indicates paging causes of M terminals, where M is a positive integer greater than or equal to 1.

Optionally, the first list and the second list have the following correspondence. A sequence of the paging causes of the paged terminals in the second list corresponds to a sequence of the first paging IDs of first M or last M paged terminals in the first list.

It can be understood that a first paging ID included in an i-th entry in the first list corresponds to paging cause indication information included in an i-th entry in the second list.

For example, a paging ID of a UE successfully matches an i-th entry in the first list, and a paging cause of the UE is located at a corresponding position in the second list, that is, an i-th entry; or a paging ID of a UE successfully matches a last j-th entry in the first list, and a paging cause of the UE is located at a corresponding position in the second list, that is, a last j-th entry.

Optionally, a total quantity of entries included in the first list is La, and La is greater than or equal to the total quantity M of the entries included in the second list, that is, a UE corresponding to a first paging ID before the first M or the last M first paging IDs does not need or support receiving of a paging cause.

In this embodiment of this application, the terminal receives the paging message, where the paging message carries the first list and optionally carries the second list, and the paging cause indication information indicates by using the second list; and determines the paging cause based on the paging message, to further determine subsequent behavior. Because the second list indicates the paging cause corresponding to the paged terminal that needs or supports receiving of a paging cause, signaling overhead can be effectively reduced.

Optionally, that the terminal performs a first operation based on the indication message includes the following steps:
the terminal determines, based on the first list, whether the terminal is paged;
in a case that the terminal is paged, the terminal determines, based on the second list, the paging cause of the terminal, where
whether the terminal is paged includes at least one of the following:
   if a first paging ID of the terminal successfully matches first paging IDs included in an N-th or a last N-th entry in the first list, determining that the terminal is paged, where N is a positive integer greater than or equal to 1 and less than or equal to a total number of entries included in the first list; and
   if a first paging ID of the terminal fails to match first paging IDs included in all entries in the first list, determining that the terminal is not paged, where
   that the terminal determines, based on the second list, the paging cause of the terminal includes at least one of the following:
      obtaining, by the terminal, paging cause indication information corresponding to an N-th or a last N-th entry in the second list, to determine the paging cause of the terminal; and
      determining, by the terminal, that a network side device does not support sending of a paging cause, in a case that a total of entries included in the second list is less than N.

Optionally, that a first paging ID of the terminal successfully matches first paging IDs included in an N-th or a last N-th entry in the first list means that the first paging ID of the terminal is the same as the first paging ID included in the N-th entry in the first list; and
that a first paging ID of the terminal fails to match first paging IDs included in all entries in the first list means that the first paging ID of the terminal is different from first paging IDs included in all entries in the first list.

Optionally, if a terminal is paged, that is, the first paging ID of the terminal successfully matches the first paging ID included in the N-th or the last N-th entry in the first list, and a paging cause of the terminal can further be determined based on the second list, and the paging cause of the terminal is located at a corresponding position in the second list, that is, the N-th entry or the last N-th entry.

Optionally, if the total quantity of the entries in the second list is greater than N, that is, there is the N-th or the last N-th entry in the second list, paging cause indication information corresponding to the N-th or the last N-th entry in the second list is obtained, and the paging cause of the terminal is further determined according to the paging cause indication information.

Further, that the terminal obtains the paging cause indication information corresponding to the N-th or the last N-th entry in the second list, to determine the paging cause of the terminal includes at least one of the following:
determining, if the paging cause indication information corresponding to the N-th or the last N-th entry in the second list is carried, the paging cause of the terminal based on the paging cause indication information; and
performing, if the paging cause indication information corresponding to the N-th or the last N-th entry in the second list is not carried, one of the following: determining, by the terminal, the paging cause of the terminal based on a protocol agreement; and determining that the paging cause indication information corresponding to the terminal is the same as paging cause indication information corresponding to a previous entry that carries paging cause indication information.

It can be understood that, if the terminal can obtain the paging cause indication information corresponding to the N-th or the last N-th entry in the second list, it indicates that the network side device indicates the paging cause of the terminal.

Optionally, if the paging cause indication information corresponding to the N-th or the last N-th entry in the second list is carried, the paging cause is determined according to the paging cause indication information corresponding to the entry. For example, an entry indicates that a UE is paged due to a voice service, and the UE determines that the UE is paged due to the voice service.

Optionally, if the paging cause indication information corresponding to the N-th or the last N-th entry in the second list is not carried, that is, does not appear, the terminal determines, based on protocol agreement, the paging cause of the terminal; or it is determined that the paging cause indication information corresponding to the terminal is the same as paging cause indication information corresponding to a previous entry that carries paging cause indication information. In this way, air interface signaling overhead can be reduced. For example, when the paging cause of the terminal is a non-voice service, the paging cause indication information corresponding to the N-th or the last N-th entry is not carried, or when the paging cause of the terminal is the same as a paging cause of a terminal corresponding to a previous entry, the paging cause indication information corresponding to the terminal may not appear.

For ease of understanding that the paging cause indication information is not carried, the length of the second list and an entry field may be used for detailed description. The entry field explicitly indicates the paging cause of the terminal; and the length indicates the total quantity of the entries included in the second list. For example, a length field is 4, representing that paging causes of four paged terminals (UE_ID1, UE_ID2, UE_ID3, UE_ID4) are indicated. one-bit information in an entry field indicates that a paging cause defined in a protocol is carried or not carried, for example, a voice service. In an entry field, a first entry is 1, a second entry is 0, a third entry is 1, and a fourth entry is 0. In an implementation, the entry field represents that the paging causes of the UE_ID1 and the UE _ID3 are paging causes defined in a protocol, and the paging causes of the UE _ID2 and the UE_ID4 are paging causes complementary to the paging causes defined in a protocol, for example, a non-voice service. In another implementation, the paging cause indication information corresponding to the terminal is the same as the paging cause indication information corresponding to the previous entry that carries paging cause indication information, that is, the paging cause of the UE_ID2 is the same as that of the UE_ID1.

Optionally, in a case that the total quantity of the entries included in the second list is less than N, the terminal determines that the network side device does not support sending of a paging cause.

If the total quantity M of the entries included in the second list is less than N, that is, there is no N-th or last N-th entry in the second list, it indicates that the network side device does not indicates the paging cause of the terminal. That the network side device does not indicates the paging cause of the terminal includes the following cases. The network side device does not support sending of a paging cause. That is, the network side device does not support sending of the paging cause of the terminal.

That the network side device does not support sending of a paging cause includes: an access network does not support and/or a core network does not support.

One cell may be connected to a plurality of core networks (assuming that a CN 1 supports and a CN 2 does not support), for example, the UE 1 is connected to the CN 1, and the UE 2 is connected to the CN 2. If the access network/cell supports sending of the paging cause of the UE 1, but the core network CN 1 does not support sending of the paging cause of the UE 1, the second list does not include the paging cause indication information of the UE 1.

Based on the foregoing embodiment, optionally, the method further includes:
receiving downlink signaling, where the downlink signaling carries or does not carry first indication information, and the first indication information indicates that the paging message supports carrying of a paging cause; and
determining, by the terminal if the downlink signaling does not carry the first indication information, that a current cell does not support sending of a paging cause; or
determining, by the terminal if the downlink signaling carries the first indication information, that a current cell supports sending of a paging cause, where
the downlink signaling includes one of the following:
   a paging message;
   system information; and
   downlink scheduling signaling.

Optionally, the first indication information indicates that the paging message supports carrying of a paging cause, that is, a current cell supports sending of a paging cause.

If the downlink signaling carries the first indication information, it indicates that the current cell supports sending of a paging cause.

In an implementation, the paging message carries or does not carry the first indication information.

In an implementation, a system message carries or does not carry the first indication information. For example, in a cell broadcast message, if SIBx carries the first indication information, it indicates that the network side device supports sending of the paging cause of the terminal.

In an implementation, the downlink schedule signaling carries or does not carry the first indication information.

Based on the foregoing embodiment, optionally, that the terminal determines, based on the second list, the paging cause of the terminal further includes:
determining, by the terminal if the downlink signaling carries the first indication information, and the paging message does not carry the second list, that the network side device does not supports sending of a paging cause.

It can be understood that, the downlink signaling carries the first indication information, it indicates that the current cell supports sending of a paging cause. However, the paging message does not carry the second list at the same time, that is, the second list includes zero entries, indicating that no paging cause of a terminal is indicated. In this case, the terminal determines that the network side device does not support sending of a paging cause. Further, the terminal determines that the core network does not support sending of a paging cause.

In some other optional embodiments, that the paging message carries or does not carry the paging cause indication information includes:
the paging message carries at least one of a third list and a fourth list, where
each entry in the third list includes a first paging ID of a paged terminal; and
each entry in the fourth list includes a first paging ID of a paged terminal and paging cause indication information corresponding to the first paging ID, where
a first paging ID of a same paged terminal does not exist in both the third list and the fourth list.

Optionally, if the terminal is a paged terminal that needs or supports receiving of a paging cause, but the network side device does not support sending of a paging cause, a paging ID of the terminal is included in a third list.

Optionally, if the terminal does not need or support receiving of a paging cause, a paging ID of the terminal is included in a third list.

Optionally, if the terminal is a paged terminal that needs or support receiving of a paging cause, and the network side device supports sending of the paging cause of the terminal, a paging ID of the terminal and paging cause indication information are included in a fourth list.

For example, one cell may be connected to a plurality of core networks, assuming that an access network/cell supports sending of a paging cause, a core network CN 1 supports sending of a paging cause, a CN 2 does not support sending of a paging cause, and assuming that a UE 1 is connected to the CN 1, and a UE 2 is connected to the CN 2, a paging message is sent by the cell, and therefore, a first paging ID of the UE 1 is included in the fourth list. A first paging ID of the UE 2 is included in the third list.

Optionally, the paging cause corresponding to the first paging ID in the fourth list is optionally carried.

In this embodiment of this application, by carrying, in the paging message, at least one of the third list and the fourth list, the terminal determines the paging cause based on the paging message, to further determine subsequent behavior and effectively reduce signaling overhead.

Based on the foregoing embodiment, optionally, that the terminal performs the first operation based on the paging message includes at least one of the following:
determining, by the terminal if a first paging ID of the terminal successfully matches a first paging ID included in a P-th entry in the third list, that a network side device does not support sending of a paging cause;
obtaining, if the first paging ID of the terminal successfully matches a first paging ID included in a P-th entry in the fourth list, paging cause indication information included in the P-th entry in the fourth list, to determine a paging cause of the terminal; and
determining, if a first paging ID of the terminal fails to match a first paging ID included in any entry in the third list and the fourth list, that the terminal is not paged, where
P is a positive integer greater than or equal to 1.

Further, the obtaining paging cause indication information included in the P-th entry in the fourth list, to determine a paging cause of the terminal includes:
determining the paging cause of the terminal based on the paging cause indication information if the paging cause indication information included in the P-th entry in the fourth list is carried; or
performing one of the following if the paging cause indication information included in the P-th entry is not carried: determining the paging cause of the terminal based on a protocol agreement; and determining that the paging cause indication information corresponding to the terminal is the same as paging cause indication information corresponding to a previous entry that explicitly carries or carries paging cause indication information.

Optionally, if the paging cause indication information included in the P-th entry in the fourth list is carried, the paging cause of the terminal is determined according to the paging cause indication information. For example, the entry indicates that the UE is paged due to a voice service, and the UE determines that the UE is carried due to the voice service.

Optionally, if paging cause indication information corresponding to the P-th or a last P-th in the fourth list is not carried, that is, does not appear, the terminal determines, based on protocol agreement, the paging cause of the terminal; or determining that the paging cause indication information corresponding to the terminal is the same as paging cause indication information corresponding to a previous entry that carries paging cause indication information. In this way, signaling overhead of the air interface can be reduced. For example, when the paging cause of the terminal is a non-voice service, the paging cause indication information corresponding to the P-th or the last P-th entry is not carried; or when the paging cause of the terminal is the same as a paging cause of a terminal corresponding to a previous entry, the paging cause indication information corresponding to the terminal may not appear.

For understanding that the paging cause indication information is not carried, refer to the foregoing embodiment. This is not described herein again.

Optionally, the determining the paging cause of the terminal based on protocol agreement includes:
determining that the paging cause of the terminal is paging triggered by a non-voice service or another paging cause complementary to a paging cause defined in the protocol.

It should be noted that the determining the paging cause of the terminal based on the protocol agreement described in the foregoing embodiment, may be understood a determining the paging cause of the terminal is paging triggered by a non-voice service or another paging cause complementary to the paging cause defined in a protocol.

Optionally, the paging cause indication information is generated based on an encryption input parameter. The encryption input parameter includes at least one of the following:
all or some user equipment identifiers UE IDs of the paged terminal;
a key shared by a network side device and the paged terminal; and
a paging cause or paging cause indication information of the paged terminal before encryption, where
that the terminal performs the first operation based on the paging message includes:
   obtaining, by the terminal, paging cause indication information corresponding to the terminal; and
   decrypting the paging cause indication information, to obtain a paging cause of the terminal.

In some optional embodiments, the paging cause indication information is encrypted, and only a paged UE can decrypt the paging cause.

Optionally, the network side device can generate paging cause indication information based on the encryption input parameter.

Optionally, the paging cause indication information may be generated based on at least one of all or some user equipment identifiers UE IDs of the paged terminal, a key shared by a network side device and the paged terminal, and a paging cause before encryption or paging cause indication information.

Correspondingly, after obtaining the paging cause indication information corresponding to the terminal, the terminal needs to decrypt the paging cause indication information, to obtain the paging cause of the terminal.

Based on the foregoing embodiment, optionally, after performing the first operation, the method further includes at least one of the following:
determining, by the terminal if the terminal detects that the paging cause indication information or the paging cause is an unexpected value, that the paging cause indication information or the paging cause is invalid;
reporting, by the terminal, first information to the network side device if the terminal detects that the paging cause indication information or the paging cause is an unexpected value; and
receiving, by the terminal, a security parameter sent by the network side device for subsequent decryption of a paging cause.

That is, after the terminal obtains the paging cause indication information, if it is detected that the paging cause indication information or the paging cause is an unexpected value, it is determined that the paging cause indication information or the paging cause is invalid.

Optionally, the terminal determines that the paging cause indication information or the paging cause is invalid and reports the first information. The first information indicates at least one of the following: that an unexpected paging cause or unexpected paging cause indication information is received; and a cell identifier that receives the unexpected paging cause or the unexpected paging cause indication information.

Optionally, after receiving the first information reported by the terminal, the network side device sends a security parameter for subsequent decryption of the paging cause, and the terminal receives the security parameter sent by the network side device for subsequent decryption of the paging cause.

Optionally, the second list or the fourth list includes at least one of the following:
a length field; and
an Entry field, where
the length field indicates a total number of entries included in the second list or the fourth list, and the Entry field carries or does not carry the paging cause indication information of the terminal, where
when the paging cause indication information is carried, it indicates that the terminal is paged due to a carried paging cause; and
when that the paging cause indication information is not carried, one of the following is included:
   the paging cause of the terminal is a paging cause agreed on in the protocol; and
   the paging cause indication information of the terminal is the same as paging cause indication information corresponding to a previous entry that carries paging cause indication information.

For example, the second list includes: a length indication; N; and N entries.

For each entry, one bit indicates whether an IE pagingCause-r17 is carried. If it indicates that the IE pagingCause-r17 is carried, the paging cause is voice; or if it indicates that the IE pagingCause-r17 is not carried, the paging cause is non-voice.

In other words, the N entries certainly appear, and the IE pagingCause-r17 optionally appears.

Because a value of only one pagingCause-r17 is defined, although the pagingCause-r17 appears, an additional bit is not required for indicating what the paging cause is. If two values (for example, A and B) of pagingCause are defined, in a case that the IE pagingCause-r17 appears, additional one bit is required for indicating whether the pagingCause is A or B.

In an implementation, when the paging cause indication information is not carried, it indicates that the paging cause of the terminal is a paging cause defined in a protocol.

In another implementation, when the paging cause indication information is not carried, it indicates that the paging cause indication information of the terminal is the same as the paging cause indication information corresponding to a previous entry that carries the paging cause indication information. In other words, when the paging cause of the terminal is the same as a paging cause of the terminal corresponding to the previous entry, the paging cause indication information corresponding to the terminal may not appear. In this way, signaling overhead is reduced.

In some other optional embodiments, that the paging message carries or does not carry the paging cause indication information includes at least one of the following:
the paging message carries a second paging ID allocated by a network side device to the paged terminal that needs or supports receiving of a paging cause;
the paging message carries a third paging ID corresponding to the paged terminal that needs or supports receiving of a paging cause, where the third paging ID is obtained based on at least one of a first paging ID of the paged terminal and a deducing manner agreed on in the protocol; and
the paging message is scheduled by a PDCCH scrambled by using an RNTI corresponding to a paging cause, where RNTIs corresponding to different paging causes are explicitly indicated by a network side device or obtained in the deducing manner agreed on in the protocol.

That the terminal performs the first operation based on the paging message includes at least one of the following:
determining, by the terminal, the paging cause based on the second paging ID;
determining, by the terminal, the paging cause based on the third paging ID; and
determining, by the terminal, the paging cause based on the RNTI.

Optionally, the paging cause may be implicitly carried through a paging ID.

Optionally, the paging message carries the second paging ID allocated by the network side device to the paged terminal that needs or supports receiving of a paging message; or
the paging message carries the third paging ID of the paged terminal that needs or supports receiving of a paging cause, where the third paging ID is obtained based on at least one of the first paging ID of the paged terminal and the deducing manner agreed on in a protocol.

For example, the NW presets two paging causes A and B; and in addition, the NW allocates two paging IDs ID _A and ID_B, respectively corresponding to the paging causes A and B, for each UE that needs receiving of a paging cause.

When paging is triggered due to the cause A, the NW carries, in the PagingRecordList, the ID _A to page the UE; and when paging is triggered due to the cause B, the NW carries, in the PagingRecordList, the ID_B to page the UE.

Optionally, the ID_A and the ID_B may alternatively be obtained according to at least one of the first paging ID of the paged terminal and the deducing manner agreed on in a protocol.

Whether the ID_A or the ID_B is used to page the UE, a moment at which the UE monitors paging does not change. In this way, implementation complexity of a UE can be reduced.

Optionally, the paging message is scheduled by a PDCCH scrambled by using an RNTI corresponding to the paging cause, where RNTIs corresponding to different paging causes are obtained through explicit indication by the network side device or in a deducing manner agreed on in a protocol.

For example, the NW presets two RNTIs (RNTI_A and RNTI_B), respectively corresponding to the two preset paging causes A and B. When paging is triggered due to the cause A, the NW uses a PDCCH scrambled by the RNTI _A for scheduling and transmits the paging message in a corresponding PDSCH channel, where the PagingRecordList carries the paging ID of the paged UE. When paging is triggered due to the cause B, the NW uses a PDCCH scrambled by the RNTI_B for scheduling and transmits the paging message in a corresponding PDSCH channel, where the PagingRecordList carries the paging ID of the paged UE.

Optionally, before that the terminal receives the paging message, the following is further included.
reporting, by the terminal, second information to the network side device, where the second information indicates that the terminal needs or supports receiving of a paging cause, or that the terminal does not need or support receiving of a paging cause.

Optionally, after accessing a network, the UE reports to the network whether the UE needs or supports receiving of a paging cause. When a multi-SIM device enables a plurality of SIM cards, the UE thereof may report whether the UE needs or supports receiving of a paging cause.

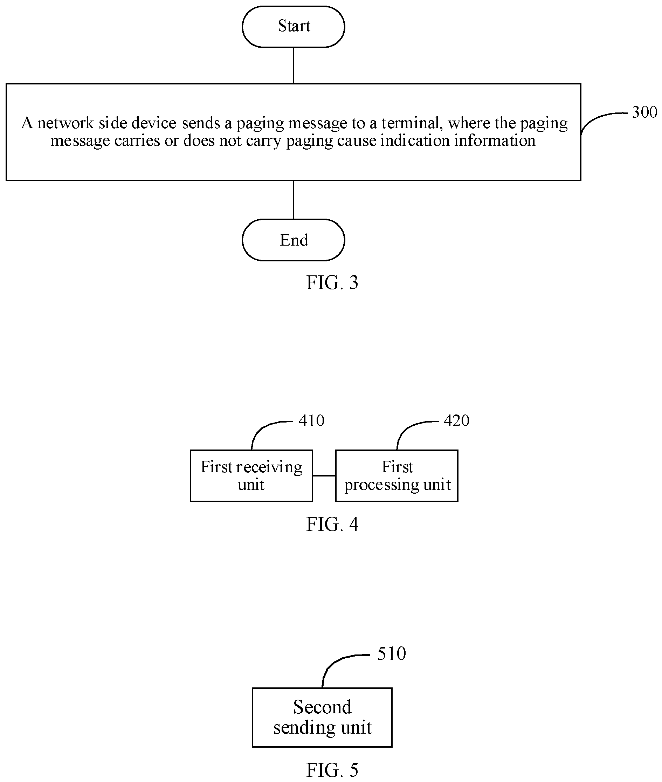

FIG. 3 is a schematic flowchart 2 of a paging method according to an embodiment of this application. As shown in FIG. 3, the method includes the following steps.

Step 300: A network side device sends a paging message to a terminal, where the paging message carries or does not carry paging cause indication information.

Optionally, the network side device sends the paging paging message to the terminal, where the paging message carries or does not carry the paging cause paging cause indication information.

The paging cause indication information indicates a paging cause corresponding to a paged terminal that needs or supports receiving of a paging cause. For example, the paging cause indication information indicates that paging is triggered by a voice service (for example, VoNR).

Optionally, that the paging message carries or does not carry the paging cause indication information means that the paging message optionally carries the paging cause indication information.

Optionally, if the network side device does not support sending of a paging cause of the paged terminal, or the paged terminal does not support or need receiving of a paging cause, the paging message does not carry the paging cause indication information of the paged terminal.

Optionally, if the paged terminal supports or needs receiving of a paging cause, and the paging cause of the paged terminal is a paging cause defined in a protocol (for example, a voice service), the paging message carries the paging cause indication information of the paged terminal.

Optionally, if the paged terminal supports or needs receiving of a paging cause, and the paging cause of the paged terminal is not a paging cause defined in a protocol (for example, a non-voice service), the paging message may not carry the paging cause indication information of the paged terminal, but needs to indicate that the paging cause indication information of the paged terminal is not carried.

Optionally, the paging cause indication information may be coding information, for example, code 000 represents a paging cause A, and code 001 represents a paging cause B.

Optionally, the paging cause indication information may be a paging priority. That is, an NW does not send a specific service type triggering paging, but a priority corresponding to a service triggering paging. The priority corresponding to the service triggering paging may be specified in a protocol or negotiated by a UE and an NW, or set by an operator. The paging priority may be a number, for example, 1, 2, ..., and N, and priorities corresponding to N priorities sequentially increase or decrease.

It should be noted that, the paging cause indication information may be information in another form.

In this embodiment of this application, the network side device sends the paging message, where the paging message optionally carries the paging cause indication information, and the paging cause indication information indicates the paging cause corresponding to the paged terminal that needs or supports receiving of a paging cause, and signaling overhead can be effectively reduced.

Optionally, that the paging message carries or does not carry paging cause indication information includes: the paging message carries a first list, or the paging message carries a first list and a second list, where
each entry in the first list includes a first paging ID of a paged terminal;
each entry in the second list includes paging cause indication information of a paged terminal; and
a sequence of paging cause indication information of paged terminals in the second list corresponds to a sequence of first paging IDs of first M or last M paged terminals in the first list, where M is a total number of entries included in the second list.

It can be understood that the first list indicates the first paging identifier ID of the paged terminal, the first list includes a plurality of entries, and each entry in the first list includes a first paging ID of a paged terminal.

Different from an existing paging message, in this embodiment of this application, the paging message carries the first list, that is the PagingRecordList, and optionally carries the second list.

The second list includes a plurality of entries, and each entry in the second list includes paging cause indication information of a paged terminal. The paging cause indication information is optionally carried.

The second list includes M entries, that is, a length of the second list is M, representing that the network side device indicates paging causes of M terminals, where M is a positive integer greater than or equal to 1.

Optionally, the first list and the second list have the following correspondence. A sequence of the paging causes of the paged terminals in the second list corresponds to a sequence of the first paging IDs of first M or last M paged terminals in the first list.

It can be understood that a first paging ID included in an i-th entry in the first list corresponds to paging cause indication information included in an i-th entry in the second list.

For example, a paging ID of a UE successfully matches an i-th entry in the first list, and a paging cause of the UE is located at a corresponding position in the second list, that is, an i-th entry; or a paging ID of a UE successfully matches a last j-th entry in the first list, and a paging cause of the UE is located at a corresponding position in the second list, that is, a last j-th entry.

Optionally, a total quantity of entries included in the first list is La, and La is greater than or equal to the total quantity M of the entries included in the second list, that is, a UE corresponding to a first paging ID before the first M or the last M first paging IDs does not need or support receiving of a paging cause.

In this embodiment of this application, the network side device sends the paging message, where the paging message carries the first list and optionally carries the second list, and the paging cause indication information is indicated through the second list. Because the second list indicates the paging cause corresponding to the paged terminal that needs or supports receiving of a paging cause, signaling overhead can be effectively reduced.
that the paging message carries or does not carry paging cause indication information includes: the paging message carries at least one of a third list and a fourth list, where
each entry in the third list includes a first paging ID of a terminal; and
each entry in the fourth list includes a first paging ID of a terminal and paging cause indication information corresponding to the first paging ID, where
a first paging ID of a same paged terminal does not exist in both the third list and the fourth list.

Optionally, if the terminal is a paged terminal that needs or supports receiving of a paging cause, but the network side device does not support sending of a paging cause., a paging ID of the terminal is included in a third list.

Optionally, if the terminal does not need or support receiving of a paging cause, a paging ID of the terminal is included in a third list.

Optionally, if the terminal is a paged terminal that needs or support receiving of a paging cause, and the network side device supports sending of the paging cause of the terminal, a paging ID of the terminal and paging cause indication information are included in a fourth list.

For example, one cell may be connected to a plurality of core networks, assuming that an access network/cell supports sending of a paging cause, a core network CN 1 supports sending of a paging cause, a CN 2 does not support sending of a paging cause, and assuming that a UE 1 is connected to the CN 1, and a UE 2 is connected to the CN 2, a paging message is sent by the cell, and therefore, a first paging ID of the UE 1 is included in the fourth list. A first paging ID of the UE 2 is included in the third list.

Optionally, the paging cause corresponding to the first paging ID in the fourth list is optionally carried.

In this embodiment of this application, the network side device can effectively reduce signaling overhead with the paging message carrying at least one of the third list and the fourth list.

Optionally, the paging cause indication information is generated based on an encryption input parameter, where the encryption input parameter includes at least one of the following:
all or some user equipment identifiers UE IDs of the paged terminal;
a key shared by a network side device and the paged terminal; and
a paging cause or paging cause indication information of the paged terminal before encryption.

In some optional embodiments, the paging cause indication information is encrypted, and only a paged UE can decrypt the paging cause.

Optionally, the network side device can generate paging cause indication information based on the encryption input parameter.

Optionally, the network side device may generate the paging cause indication information based on at least one of all or some user equipment identifiers UE IDs of the paged terminal, a key shared by a network side device and the paged terminal, and a paging cause before encryption or paging cause indication information.

Optionally, the method further includes at least one of the following:
receiving, by the network side device, first information sent by the terminal; and
sending, by the network side device to the terminal, a security parameter for subsequent decryption of the paging cause, where

Optionally, after the terminal obtains the paging cause indication information, if it is detected that the paging cause indication information or the paging cause is an unexpected value, it is determined that the paging cause indication information or the paging cause is invalid, and the first information is reported.

The first information indicates at least one of the following: that an unexpected paging cause or unexpected paging cause indication information is received; and a cell identifier that receives the unexpected paging cause or the unexpected paging cause indication information.

Optionally, after receiving the first information reported by the terminal, the network side device sends a security parameter for subsequent decryption of the paging cause, and the terminal receives the security parameter sent by the network side device for subsequent decryption of the paging cause.

Optionally, the second list or the fourth list includes at least one of the following:
a length field; and
an Entry field, where
the length field indicates a total number of entries included in the second list or the fourth list, and the Entry field carries or does not carry the paging cause indication information of the terminal, where
when the paging cause indication information is carried, it indicates that the terminal is paged due to a carried paging cause; and
when that the paging cause indication information is not carried, one of the following is included:
   the paging cause of the terminal is a paging cause agreed on in a protocol; and
   the paging cause indication information of the terminal is the same as paging cause indication information corresponding to a previous entry that carries paging cause indication information.

For example, the second list includes: a length indication; N; and N entries.

For each entry, one bit indicates whether an IE pagingCause-r17 is carried. If the IE pagingCause-r17 is carried, it indicates that the paging cause is voice; or if the IE pagingCause-r17 is not carried, it indicates that the paging cause is non-voice.

In other words, the N entries certainly appear, and the IE pagingCause-r17 optionally appears.

Because a value of only one pagingCause-r17 is defined, although the pagingCause-r17 appears, an additional bit is not required for indicating what the paging cause is. If two values (for example, A and B) of pagingCause are defined, in a case that the IE pagingCause-r17 appears, additional one bit is required for indicating whether the pagingCause is A or B.

In an implementation, when the paging cause indication information is not carried, it indicates that the paging cause of the terminal is a paging cause defined in a protocol.

In another implementation, when the paging cause indication information is not carried, it indicates that the paging cause indication information of the terminal is the same as the paging cause indication information corresponding to a previous entry that carries the paging cause indication information. In other words, when the paging cause of the terminal is the same as a paging cause of the terminal corresponding to the previous entry, the paging cause indication information corresponding to the terminal may not appear. In this way, signaling overhead is reduced.

Optionally, the method further includes:
sending, by the network side device, downlink signaling to the terminal, where the downlink signaling carries or does not carry first indication information, and the first indication information indicates that the paging message supports carrying of a paging cause, where
the downlink signaling includes one of the following:
   a paging message;
   system information; and
   downlink scheduling signaling.

Optionally, the first indication information indicates that the paging message supports carrying of a paging cause, that is, a current cell supports sending of a paging cause.

If the downlink signaling carries the first indication information, it indicates that the current cell supports sending of a paging cause.

In an implementation, the paging message sent by the terminal to the network side device carries or does not carry the first indication information.

In an implementation, a system message sent by the terminal to the network side device carries or does not carry the first indication information. For example, in a cell broadcast message, if SIBx carries the first indication information, it indicates that the network side device supports sending of the paging cause of the terminal.

In an implementation, the downlink schedule signaling sent by the terminal to the network side device carries or does not carry the first indication information.

Optionally, that the paging message carries or does not carry the paging cause indication information includes at least one of the following:
the paging message carries a second paging ID allocated by a network side device to the paged terminal that needs or supports receiving of a paging cause;
the paging message carries a third paging ID corresponding to the paged terminal that needs or supports receiving of a paging cause, where the third paging ID is obtained by the network side device based on at least one of a first paging ID of the paged terminal and a deducing manner agreed on in the protocol; and
the paging message is scheduled by a PDCCH scrambled by using an RNTI corresponding to a paging cause, where RNTIs corresponding to different paging causes are explicitly indicated by the network side device or obtained in the deducing manner agreed on in the protocol.

Optionally, the paging cause may be implicitly carried through a paging ID.

Optionally, the paging message carries the second paging ID allocated by the network side device to the paged terminal that needs or supports receiving of a paging message; or
the paging message carries a third paging ID corresponding to the paged terminal that needs or supports receiving of a paging cause, where the third paging ID is obtained by the network side device based on at least one of a first paging ID of the paged terminal and a deducing manner agreed on in the protocol; and

For example, the NW presets two paging causes A and B; and in addition, the NW allocates two paging IDs ID_A and ID_B, respectively corresponding to the paging causes A and B, for each UE that needs receiving of a paging cause.

When paging is triggered due to the cause A, the NW carries, in the PagingRecordList, the ID _A to page the UE; and when paging is triggered due to the cause B, the NW carries, in the PagingRecordList, the ID_B to page the UE.

Optionally, the ID_A and the ID_B may alternatively be obtained according to at least one of the first paging ID of the paged terminal and the deducing manner agreed on in a protocol.

Whether the ID _A or the ID_B is used to page the UE, a moment at which the UE monitors paging does not change. In this way, implementation complexity of a UE can be reduced.

Optionally, the paging message is scheduled by a PDCCH scrambled by using an RNTI corresponding to the paging cause, where RNTIs corresponding to different paging causes are obtained through explicit indication by the network side device or in a deducing manner agreed on in a protocol.

For example, the NW presets two RNTIs (RNTI_A and RNTI_B), respectively corresponding to the two preset paging causes A and B. When paging is triggered due to the cause A, the NW uses a PDCCH scrambled by the RNTI_A for scheduling and transmits the paging message in a corresponding PDSCH channel, where the PagingRecordList carries the paging ID of the paged UE. When paging is triggered due to the cause B, the NW uses a PDCCH scrambled by the RNTI_B for scheduling and transmits the paging message in a corresponding PDSCH channel, where the PagingRecordList carries the paging ID of the paged UE.

Optionally, the method further includes:
receiving, by the network side device, second information reported by the terminal, where the second information indicates that the terminal needs or supports receiving of a paging cause, or that the terminal does not need or support receiving of a paging cause.

Optionally, after accessing a network, the UE reports to the network whether the UE needs or supports receiving of a paging cause. When a multi-SIM device enables a plurality of SIM cards, the UE thereof may report whether the UE needs or supports receiving of a paging cause.

After the network side device receives the second information, for the terminal that needs or supports receiving of a paging cause, the paging cause indication information of the terminal is carried in the paging message. For the terminal that does not need or support receiving of a paging cause, the paging cause indication information is not carried in the paging message, to effectively reduce signaling overhead.

It should be noted that, the paging method provided in this embodiment of this application may be performed by a paging apparatus, or a control module for performing the paging method in the paging apparatus. An example in which a paging apparatus performs the paging method is used in this embodiment of this application to describe the paging apparatus provided in this embodiment of this application.

FIG. 4 is a schematic structural diagram 1 of a paging apparatus according to an embodiment of this application. As shown in FIG. 4, the apparatus includes:
a first receiving unit 410, configured to receive a paging message, where the paging message carries or does not carry paging cause indication information, where the paging cause indication information indicates a paging cause corresponding to a paged terminal that needs or supports receiving of a paging cause; and
a first processing unit 420, configured to perform a first operation based on the paging message.

In this embodiment of this application, the paging message is received, where the paging message optionally carries the paging cause indication information, and the paging cause indication information indicates the paging cause corresponding to the paged terminal that needs or supports receiving of a paging cause; and the paging cause is determined based on the paging message, to further determine subsequent behavior and effectively reduce signaling overhead.

Optionally, that the paging message carries or does not carry paging cause indication information includes: the paging message carries a first list, or the paging message carries a first list and a second list, where
each entry in the first list includes a first paging ID of a paged terminal;
each entry in the second list includes paging cause indication information of a paged terminal; and
a sequence of paging cause indication information of paged terminals in the second list corresponds to a sequence of first paging IDs of first M or last M paged terminals in the first list, where M is a total number of entries included in the second list.

Optionally, the first processing unit is configured to:
determine, based on the first list, whether a terminal is paged; and
determine, if the terminal is paged, a paging cause of the terminal based on the second list, where
that whether the terminal is paged is determined includes at least one of the following:
   determining, if a first paging ID of the terminal successfully matches a first paging ID included in an N-th or a last N-th entry in the first list, that the terminal is paged, where N is a positive integer greater than or equal to 1 and less than or equal to a total number of entries included in the first list; and
   determining, if the first paging ID of the terminal fails to match a first paging ID included in any entry in the first list, that the terminal is not paged, where
   that the paging cause of the terminal is determined based on the second list includes at least one of the following:
      obtaining paging cause indication information corresponding to an N-th or a last N-th entry in the second list, to determine the paging cause of the terminal; and
      determining, if a total of entries included in the second list is less than N, that a network side device does not support sending of a paging cause.

Optionally, that the terminal obtains the paging cause indication information corresponding to the N-th or the last N-th entry in the second list, to determine the paging cause of the terminal includes at least one of the following:
determining, if the paging cause indication information corresponding to the N-th or the last N-th entry in the second list is carried, the paging cause of the terminal based on the paging cause indication information; and
performing, if the paging cause indication information corresponding to the N-th or the last N-th entry in the second list is not carried, one of the following: determining, by the terminal, the paging cause of the terminal based on a protocol agreement; and determining that the paging cause indication information corresponding to the terminal is the same as paging cause indication information corresponding to a previous entry that carries paging cause indication information.

Optionally, the second processing unit is included and is configured to:
receive downlink signaling, where the downlink signaling carries or does not carry first indication information, and the first indication information indicates that the paging message supports carrying of a paging cause, and
determining, by the terminal if the downlink signaling does not carry the first indication information, that a current cell does not support sending of a paging cause; or
the terminal determines, if the downlink signaling carries the first indication information, that a current cell supports sending of a paging cause, where
the downlink signaling includes one of the following:
   a paging message;
   system information; and
   downlink scheduling signaling.

Optionally, determining the paging cause of the terminal based on the second list further includes:
determining, by the terminal if the downlink signaling carries the first indication information, and the paging message does not carry the second list, that a network side device does not supports sending of a paging cause.

Optionally, that the paging message carries or does not carry paging cause indication information includes: the paging message carries at least one of a third list and a fourth list, where
each entry in the third list includes a first paging ID of a paged terminal; and
each entry in the fourth list includes a first paging ID of a paged terminal and paging cause indication information corresponding to the first paging ID, where
a first paging ID of a same paged terminal does not exist in both the third list and the fourth list.

Optionally, the first processing unit is configured to perform at least one of the following:
determining, by the terminal if a first paging ID of the terminal successfully matches a first paging ID included in a P-th entry in the third list, that a network side device does not support sending of a paging cause;
obtaining, if the first paging ID of the terminal successfully matches a first paging ID included in a P-th entry in the fourth list, paging cause indication information included in the P-th entry in the fourth list, to determine a paging cause of the terminal; and
determining, if a first paging ID of the terminal fails to match a first paging ID included in any entry in the third list and the fourth list, that the terminal is not paged, where
P is a positive integer greater than or equal to 1.

Optionally, that the obtaining paging cause indication information included in the P-th entry in the fourth list, to determine a paging cause of the terminal includes:
determining the paging cause of the terminal based on the paging cause indication information if the paging cause indication information included in the P-th entry in the fourth list is explicitly carried or carried; or
performing one of the following if the paging cause indication information included in the P-th entry is implicitly carried or not carried: determining the paging cause of the terminal based on a protocol agreement; and determining that the paging cause indication information corresponding to the terminal is the same as paging cause indication information corresponding to a previous entry that explicitly carries or carries paging cause indication information.

Optionally, the determining the paging cause of the terminal based on a protocol agreement; and
determining that the paging cause of the terminal is paging triggered by a non-voice service or another paging cause complementary to a paging cause defined in a protocol.

Optionally, the paging cause indication information is generated based on an encryption input parameter, where the encryption input parameter includes at least one of the following:
all or some user equipment identifiers UE IDs of the paged terminal;
a key shared by a network side device and the paged terminal; and
a paging cause of the paged terminal before encryption, where
the first processing unit is configured to:
   obtain paging cause indication information corresponding to the terminal; and
   decrypt the paging cause indication information, to obtain the paging cause of the terminal.

Optionally, a third processing unit is further included and is configured to perform at least one of the following:
determining, if it is detected that the paging cause indication information or the paging cause is an unexpected value, that the paging cause indication information or the paging cause is invalid;
reporting first information to the network side device if it is detected that the paging cause indication information or the paging cause is an unexpected value; and
receiving a security parameter sent by the network side device for subsequent decryption of a paging cause, where
the first information indicates at least one of the following:
   that an unexpected paging cause or unexpected paging cause indication information is received; and
   a cell identifier that receives the unexpected paging cause or the unexpected paging cause indication information.

Optionally, the second list or the fourth list includes at least one of the following:
a length field; and
an Entry field, where
the length field indicates a total number of entries included in the second list or the fourth list, and the Entry field carries or does not carry the paging cause indication information of the terminal, where
when the paging cause indication information is carried, it indicates that the terminal is paged due to a carried paging cause; and
when that the paging cause indication information is not carried, one of the following is included:
   the paging cause of the terminal is a paging cause agreed on in a protocol; and
   the paging cause indication information of the terminal is the same as paging cause indication information corresponding to a previous entry that carries paging cause indication information.

Optionally, that the paging message carries or does not carry paging cause indication information includes at least one of the following:
the paging message carries a second paging ID allocated by a network side device to the paged terminal that needs or supports receiving of a paging cause;
the paging message carries a third paging ID corresponding to the paged terminal that needs or supports receiving of a paging cause, where the third paging ID is obtained based on at least one of a first paging ID of the paged terminal and a deducing manner agreed on in a protocol; and
the paging message is scheduled by a PDCCH scrambled by using an RNTI corresponding to a paging cause, where RNTIs corresponding to different paging causes are explicitly indicated by a network side device or obtained in the deducing manner agreed on in the protocol.

Optionally, the processing unit is configured to perform at least one of the following:
determining the paging cause based on the second paging ID;
determining the paging cause based on the third paging ID; and
determining the paging cause based on the RNTI.

Optionally, the following is further included:
a first sending unit, configured to report second information to the network side device, where the second information indicates that the terminal needs or supports receiving of a paging cause, or that the terminal does not need or support receiving of a paging cause.

The paging apparatus in this embodiment of this application may be an apparatus, or an apparatus or electronic device with an operating system, or may be a component, an integrated circuit, or a chip in a terminal. The apparatus or the electronic device may be a mobile terminal, or may be a non-mobile terminal. For example, the mobile terminal may include, but is not limited to, type of the terminal 11 listed above, and the non-mobile terminal may be a server, a network attached storage (network attached storage, NAS), a personal computer (personal computer, PC), a television (television, TV), a teller machine, a self-service machine, or the like. This is not limited in this embodiment of this application.

The paging apparatus provided in this embodiment of this application can implement all processes implemented in the method embodiment in FIG. 2 and has a same technical effect. To avoid repetition, details are not described herein again.

FIG. 5 is a schematic structural diagram 2 of a paging apparatus according to an embodiment of this application. As shown in FIG. 5, the apparatus includes:
a second sending unit 510, configured to send a paging message to a terminal, where the paging message carries or does not carry paging cause indication information, where the paging cause indication information indicates a paging cause corresponding to a paged terminal that needs or supports receiving of a paging cause.

In this embodiment of this application, the paging message is sent, where the paging message optionally carries the paging cause indication information, and the paging cause indication information indicates the paging cause corresponding to the paged terminal that needs or supports receiving of a paging cause, and signaling overhead can be effectively reduced.

Optionally, that the paging message carries or does not carry paging cause indication information includes: the paging message carries a first list, or the paging message carries a first list and a second list, where
each entry in the first list includes a first paging ID of a paged terminal;
each entry in the second list includes paging cause indication information of a paged terminal; and
a sequence of paging cause indication information of paged terminals in the second list corresponds to a sequence of first paging IDs of first M or last M paged terminals in the first list, where M is a total number of entries included in the second list.

Optionally, that the paging message carries or does not carry paging cause indication information includes: the paging message carries at least one of a third list and a fourth list, where
each entry in the third list includes a first paging ID of a terminal; and
each entry in the fourth list includes a first paging ID of a terminal and paging cause indication information corresponding to the first paging ID, where
a first paging ID of a same paged terminal does not exist in both the third list and the fourth list.

Optionally, the paging cause indication information is generated based on an encryption input parameter, where the encryption input parameter includes at least one of the following:
all or some user equipment identifiers UE IDs of the paged terminal;
a key shared by a network side device and the paged terminal; and
a paging cause or paging cause indication information of the paged terminal before encryption.

Optionally, the following is further included: a fourth processing unit, configured to perform at least one of the following:
receiving first information sent by the terminal; and
sending, to the terminal, a security parameter for subsequent decryption of the paging cause, where
the first information indicates at least one of the following:
   that an unexpected paging cause or unexpected paging cause indication information is received; and
   a cell identifier that receives the unexpected paging cause or the unexpected paging cause indication information.

Optionally, the second list or the fourth list includes at least one of the following:
a length field; and
an Entry field, where
the length field indicates a total number of entries included in the second list or the fourth list, and the Entry field carries or does not carry the paging cause indication information of the terminal, where
when the paging cause indication information is carried, it indicates that the terminal is paged due to a carried paging cause; and
when that the paging cause indication information is not carried, one of the following is included:
   the paging cause of the terminal is a paging cause agreed on in a protocol; and
   the paging cause indication information of the terminal is the same as paging cause indication information corresponding to a previous entry that carries paging cause indication information.

Optionally, the following is further included:
a third sending unit, configured to send downlink signaling to the terminal, where the downlink signaling carries or does not carry first indication information, and the first indication information indicates that the paging message supports carrying of a paging cause, where
the downlink signaling includes one of the following:
   a paging message;
   system information; and
   downlink scheduling signaling.

Optionally, that the paging message carries or does not carry paging cause indication information includes at least one of the following:
the paging message carries a second paging ID allocated by a network side device to each paged terminal that needs or supports receiving of a paging cause;
the paging message carries a third paging ID corresponding to each paged terminal that needs or supports receiving of a paging cause, where the third paging ID is obtained by the network side device based on at least one of a first paging ID of the paged terminal and a deducing manner agreed on in a protocol; and
the paging message is scheduled by a PDCCH scrambled by using an RNTI corresponding to a paging cause, where RNTIs corresponding to different paging causes are explicitly indicated by the network side device or obtained in a deducing manner agreed on in a protocol.

Optionally, the following is further included:
a second receiving unit, configured to receive second information reported by the terminal, where the second information indicates that the terminal needs or supports receiving of a paging cause, or that the terminal does not need or support receiving of a paging cause.

The paging apparatus provided in this embodiment of this application can implement all processes implemented in the method embodiment in FIG. 3 and has a same technical effect. To avoid repetition, details are not described herein again.

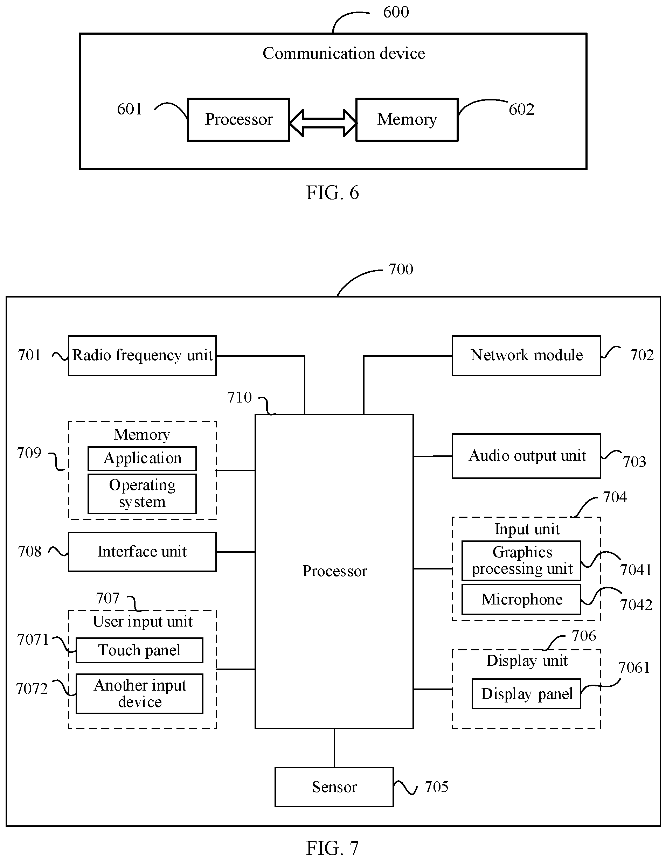

Optionally, as shown in FIG. 6, an embodiment of this application further provides a communication device 600, including a processor 601, a memory 602, and a program or instructions stored in the memory 602 and runnable on the processor 601. For example, when the communication device 600 is a terminal, the program or instructions are executed by the processor 601 to implement the processes of the foregoing paging method embodiments, and can achieve a same technical effect. When the communication device 600 is a network side device, the program or instructions are executed by the processor 601 to implement the processes of the foregoing paging method embodiments, and can achieve a same technical effect. To avoid repetition, details are not described herein again.

An embodiment of this application further provides a terminal, including a processor and a communication interface. The communication interface is configured to receive a paging message, and the paging message carries or does not carry paging cause indication information, where the paging cause indication information indicates a paging cause corresponding to a paged terminal that needs or supports receiving of a paging cause. The processor is configured to perform a first operation based on the paging message. The terminal embodiment corresponds to the foregoing terminal-side method embodiment. The processes and implementations of the foregoing method embodiment are applicable in the terminal embodiment, and a same technical effect can be achieved. Specifically, FIG. 7 is a schematic structural diagram of hardware of a terminal that implements an embodiment of this application.

The terminal 700 includes, but is not limited to: at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art can understand that the terminal 700 may further include a power supply (such as a battery) for supplying power to the components. The power supply may be logically connected to the processor 710 by a power management system, thereby implementing functions such as charging, discharging, and power consumption management by using the power management system. A terminal structure shown in FIG. 7 constitutes no limitation on the terminal, and the terminal may include more or fewer components than those shown in the figure, or some components may be combined, or a different component deployment may be used. Details are not described herein again.

It should be understood that in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition device (for example, a camera) in a video acquisition mode or an image acquisition mode. The display unit 706 may include a display panel 7061. The display panel 7061 may be configured in a form of a liquid crystal display, an organic light-emitting diode, or the like. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, which are not described herein in detail.

In this embodiment of this application, the radio frequency unit 701 receives downlink data from a network side device, and sends to the processor 710 for processing; and sends uplink data to the network side device. Generally, the radio frequency unit 701 includes, but is not limited to, an antenna, at least one amplifier, a transceiver, a coupler, a low noise amplifier, a duplexer, and the like.

The memory 709 may be configured to store a software program or instructions and various data. The memory 709 may mainly include a program or instructions storage area and a data storage area. The program or instructions storage area may store an operating system, an application program or instructions required by at least one function (for example, a sound playback function and an image display function), and the like. In addition, the memory 709 may include a high-speed random access memory, and may also include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one magnetic disk storage device, a flash memory, or another volatile solid-state storage device.

The processor 710 may include one or more processing units. Optionally, the processor 710 may integrate an application processor and a modem processor, where the application processor mainly processes an operating system, a user interface, an application program or instructions, and the like, and the modem processor mainly processes wireless communication, for example, a baseband processor. It can be understood that, the modem processor may alternatively not be integrated in the processor 710.

The radio frequency unit 701 is configured to receive a paging message, where the paging message carries or does not carry paging cause indication information, where the paging cause indication information indicates a paging cause corresponding to a paged terminal that needs or supports receiving of a paging cause.

The processor 710 is configured to perform a first operation based on the paging message.

In the embodiments of this application, the terminal receives the paging method, where the paging method carries or does not carry paging cause indication information, and the paging cause indication information indicates the paging cause corresponding to the paged terminal that needs or supports receiving of a paging cause; and determines the paging cause based on the paging message, to further determine subsequent behavior and effectively reduce signaling overhead.

Optionally, that the paging message carries or does not carry paging cause indication information includes: the paging message carries a first list, or the paging message carries a first list and a second list, where
each entry in the first list includes a first paging ID of a paged terminal;
each entry in the second list includes paging cause indication information of a paged terminal; and
a sequence of paging cause indication information of paged terminals in the second list corresponds to a sequence of first paging IDs of first M or last M paged terminals in the first list, where M is a total number of entries included in the second list.

Optionally, the processor 710 is further configured to:
determine, based on the first list, whether a terminal is paged; and
determine, if the terminal is paged, a paging cause of the terminal based on the second list, where
that whether the terminal is paged is determined includes at least one of the following:
   determining, if a first paging ID of the terminal successfully matches a first paging ID included in an N-th or a last N-th entry in the first list, that the terminal is paged, where N is a positive integer greater than or equal to 1 and less than or equal to a total number of entries included in the first list; and
   determining, if the first paging ID of the terminal fails to match a first paging ID included in any entry in the first list, that the terminal is not paged, where
   that the paging cause of the terminal is determined based on the second list includes at least one of the following:
      obtaining paging cause indication information corresponding to an N-th or a last N-th entry in the second list, to determine the paging cause of the terminal; and
      determining, if a total of entries included in the second list is less than N, that a network side device does not support sending of a paging cause.

Optionally, the obtaining paging cause indication information corresponding to an N-th or a last N-th entry in the second list, to determine the paging cause of the terminal includes at least one of the following:
determining, if the paging cause indication information corresponding to the N-th or the last N-th entry in the second list is carried, the paging cause of the terminal based on the paging cause indication information; and
performing, if the paging cause indication information corresponding to the N-th or the last N-th entry in the second list is not carried, one of the following: determining, by the terminal, the paging cause of the terminal based on a protocol agreement; and determining that the paging cause indication information corresponding to the terminal is the same as paging cause indication information corresponding to a previous entry that carries paging cause indication information.

Optionally, the processor 710 is further configured to:
receive downlink signaling, where the downlink signaling carries or does not carry first indication information, and the first indication information indicates that the paging message supports carrying of a paging cause, where
the terminal determines, if the downlink signaling does not carry the first indication information, that a current cell does not support sending of a paging cause; or
the terminal determines, if the downlink signaling carries the first indication information, that a current cell supports sending of a paging cause, where
the downlink signaling includes one of the following:
   a paging message;
   system information; and
   downlink scheduling signaling.

Optionally, the determining, by the terminal, a paging cause based on the second list further includes:
determining, by the terminal if the downlink signaling carries the first indication information, and the paging message does not carry the second list, that a network side device does not supports sending of a paging cause.

Optionally, that the paging message carries or does not carry paging cause indication information includes: the paging message carries at least one of a third list and a fourth list, where
each entry in the third list includes a first paging ID of a paged terminal; and
each entry in the fourth list includes a first paging ID of a paged terminal and paging cause indication information corresponding to the first paging ID, where
a first paging ID of a same paged terminal does not exist in both the third list and the fourth list.

Optionally, the processor 710 is further configured to:
determining, by the terminal if a first paging ID of the terminal successfully matches a first paging ID included in a P-th entry in the third list, a network side device does not support sending of a paging cause;
obtaining, if the first paging ID of the terminal successfully matches a first paging ID included in a P-th entry in the fourth list, paging cause indication information included in the P-th entry in the fourth list, to determine a paging cause of the terminal; and
determining, if a first paging ID of the terminal fails to match a first paging ID included in any entry in the third list and the fourth list, that the terminal is not paged, where
P is a positive integer greater than or equal to 1.

Optionally, the obtaining paging cause indication information included in the P-th entry in the fourth list, to determine a paging cause of the terminal, includes:
determining the paging cause of the terminal based on the paging cause indication information if the paging cause indication information included in the P-th entry in the fourth list is explicitly carried or carried; or
performing one of the following if the paging cause indication information included in the P-th entry is implicitly carried or not carried: determining the paging cause of the terminal based on a protocol agreement; and determining that the paging cause indication information corresponding to the terminal is the same as paging cause indication information corresponding to a previous entry that explicitly carries or carries paging cause indication information.

Optionally, the determining the paging cause of the terminal based on a protocol agreement; and
determining that the paging cause of the terminal is paging triggered by a non-voice service or another paging cause complementary to a paging cause defined in a protocol.

Optionally, the paging cause indication information is generated based on an encryption input parameter, where the encryption input parameter includes at least one of the following:
all or some user equipment identifiers UE IDs of the paged terminal;
a key shared by a network side device and the paged terminal; and
a paging cause of the paged terminal before encryption, where
the first processing unit is configured to:
   obtain paging cause indication information corresponding to the terminal; and
   decrypt the paging cause indication information, to obtain the paging cause of the terminal.

Optionally, the processor 710 is further configured to perform at least one of the following:
determining, if it is detected that the paging cause indication information or the paging cause is an unexpected value, that the paging cause indication information or the paging cause is invalid;
reporting first information to the network side device if it is detected that the paging cause indication information or the paging cause is an unexpected value; and
receiving a security parameter sent by the network side device for subsequent decryption of a paging cause, where
the first information indicates at least one of the following:
   that an unexpected paging cause or unexpected paging cause indication information is received; and
   a cell identifier that receives the unexpected paging cause or the unexpected paging cause indication information.

Optionally, the second list or the fourth list includes at least one of the following:
a length field; and
an Entry field, where
the length field indicates a total number of entries included in the second list or the fourth list, and the Entry field carries or does not carry the paging cause indication information of the terminal, where
when the paging cause indication information is carried, it indicates that the terminal is paged due to a carried paging cause; and
when that the paging cause indication information is not carried, one of the following is included:
   the paging cause of the terminal is a paging cause agreed on in a protocol; and
   the paging cause indication information of the terminal is the same as paging cause indication information corresponding to a previous entry that carries paging cause indication information.

Optionally, that the paging message carries or does not carry paging cause indication information includes at least one of the following:
the paging message carries a second paging ID allocated by a network side device to the paged terminal that needs or supports receiving of a paging cause;
the paging message carries a third paging ID corresponding to the paged terminal that needs or supports receiving of a paging cause, where the third paging ID is obtained based on at least one of a first paging ID of the paged terminal and a deducing manner agreed on in a protocol; and
the paging message is scheduled by a PDCCH scrambled by using an RNTI corresponding to a paging cause, where RNTIs corresponding to different paging causes are explicitly indicated by a network side device or obtained in the deducing manner agreed on in the protocol.

Optionally, the processor 710 is configured to perform at least one of the following:
determining the paging cause based on the second paging ID;
determining the paging cause based on the third paging ID; and
determining the paging cause based on the RNTI.

Optionally, the radio frequency unit 701 is further configured to:
report second information to the network side device, where the second information indicates that the terminal needs to or supports receiving of a paging cause, or that the terminal does not need or does not support receiving of a paging cause.

An embodiment of this application further provides a network side device, including a processor and a communication interface. The communication interface is configured to send a paging message to a terminal, and the paging message carries or does not carry paging cause indication information, where the paging cause indication information indicates a paging cause corresponding to a paged terminal that needs or supports receiving of a paging cause. The network side device embodiment corresponds to the foregoing terminal-side method embodiments. The processes and implementations of the foregoing method embodiments are applicable in the network side device embodiment, and a same technical effect can be achieved.

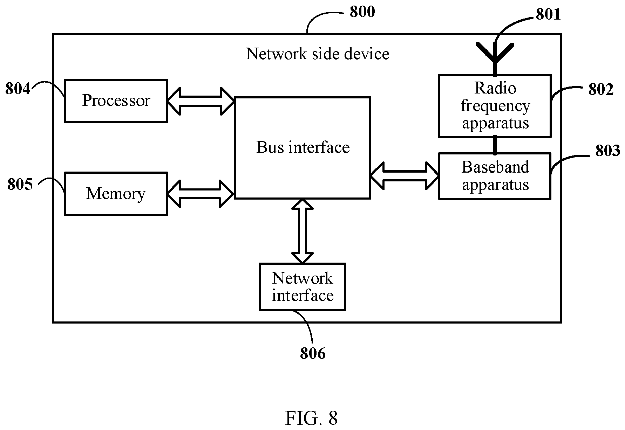

Specifically, an embodiment of this application further provides a network side device. As shown in FIG. 8, the network side device 800 includes: an antenna 801, a radio frequency apparatus 802, and a baseband apparatus 803. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends the information to the radio frequency 802, and the radio frequency 802 processes the received information and sends the processed information through the antenna 801.

The frequency band processing apparatus may be located in the baseband apparatus 803. The method performed by the network side device in the foregoing embodiment may be implemented in the baseband apparatus 803. The baseband apparatus 803 includes a processor 804 and a memory 805.

For example, the baseband 803 may include at least one baseband board. A plurality of chips are disposed on the baseband board, as shown in FIG. 8. For example, one of the chips may be the processor 804, connected to the memory 805, to call a program in the memory 805 and implement the operations of the network side device in the foregoing method embodiment.

The baseband apparatus 803 may further include a network interface 806, configured to exchange information with the radio frequency apparatus 802. For example, the interface may be a common public radio interface (common public radio interface, CPRI).

Specifically, the network side device in this embodiment of this application may further include: instructions or a program stored in the memory 805 and runnable on the processor 804. The processor 804 calls the instructions or program in the memory 805 to perform the method performed by the modules shown in FIG. 5, and achieves a same technical effect. To avoid repetition, details are not described herein again.

An embodiment of this application further provides a readable storage medium. The readable storage medium stores a program or instructions. The program or instructions, when executed by a processor, implement the processes of the foregoing paging method embodiment, and can achieve a same technical effect. To avoid repetition, details are not described herein again.

The processor is the processor in the terminal in the foregoing embodiment. The readable storage medium includes a computer-readable storage medium, such as a computer read-only memory (read-only memory, ROM), a random access memory (random access memory, RAM), a magnetic disk, or a disc.

An embodiment of this application further provides a chip. The chip includes a processor and a communication interface. The communication interface is coupled to the processor. The processor is configured to run a program or instructions, to implement the processes of the foregoing paging method embodiment, and can achieve a same technical effect. To avoid repetition, details are not described herein again.

It should be understood that the chip provided in this embodiment of this application may also be referred to as a system-level chip, a system chip, a system on a chip, or the like.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one..." does not exclude that there are still other same elements in the processes, methods, objects, or apparatuses. In addition, it should be noted that, the scope of the methods and devices in the embodiments of this application is not limited to performing functions in the order shown or discussed, and may also include performing functions in a substantially simultaneous manner or in reverse order according to the functions involved. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented by using software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc) and includes several instructions for enabling a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in this application make many forms without departing from the idea of this application and the scope of protection of the claims. All of the forms fall within the protection of this application.

## Claims

1. A paging method, comprising:
receiving, by a terminal, a paging message, wherein the paging message carries or does not carry paging cause indication information, wherein the paging cause indication information indicates a paging cause corresponding to a paged terminal that needs or supports receiving of a paging cause; and
performing, by the terminal, a first operation based on the paging message.

2. The paging method according to claim 1, wherein that the paging message carries or does not carry paging cause indication information comprises: the paging message carries a first list, or the paging message carries a first list and a second list, wherein
each entry in the first list comprises a first paging ID of a paged terminal;
each entry in the second list comprises paging cause indication information of a paged terminal; and
a sequence of paging cause indication information of paged terminals in the second list corresponds to a sequence of first paging IDs of first M or last M paged terminals in the first list, wherein M is a total number of entries comprised in the second list.

3. The paging method according to claim 2, wherein the performing, by the terminal, a first operation based on the paging message comprises:
determining, by the terminal based on the first list, whether the terminal is paged; and
determining, by the terminal if the terminal is paged, a paging cause of the terminal based on the second list, wherein
the determining whether the terminal is paged comprises at least one of following:
determining, if a first paging ID of the terminal successfully matches a first paging ID comprised in an N-th or a last N-th entry in the first list, that the terminal is paged, wherein N is a positive integer greater than or equal to 1 and less than or equal to a total number of entries comprised in the first list; and
determining, if the first paging ID of the terminal fails to match a first paging ID comprised in any entry in the first list, that the terminal is not paged, wherein
the determining, by the terminal, a paging cause of the terminal based on the second list comprises at least one of following:
obtaining, by the terminal, paging cause indication information corresponding to an N-th or a last N-th entry in the second list, to determine the paging cause of the terminal; and
determining, by the terminal if the total number of entries comprised in the second list is less than N, that a network side device does not support sending of a paging cause.

4. The paging method according to claim 3, wherein the obtaining, by the terminal, paging cause indication information corresponding to an N-th or a last N-th entry in the second list, to determine the paging cause of the terminal, comprises at least one of following:
determining, if the paging cause indication information corresponding to the N-th or the last N-th entry in the second list is carried, the paging cause of the terminal based on the paging cause indication information; and
performing, if the paging cause indication information corresponding to the N-th or the last N-th entry in the second list is not carried, one of following: determining, by the terminal, the paging cause of the terminal based on a protocol agreement; and determining that the paging cause indication information corresponding to the terminal is the same as paging cause indication information corresponding to a previous entry that carries paging cause indication information.

5. The paging method according to claim 3, wherein the method further comprises:
receiving downlink signaling, wherein the downlink signaling carries or does not carry first indication information, and the first indication information indicates that the paging message supports carrying of a paging cause; and
determining, by the terminal if the downlink signaling does not carry the first indication information, that a current cell does not support sending of a paging cause; or
determining, by the terminal if the downlink signaling carries the first indication information, that a current cell supports sending of a paging cause, wherein
the downlink signaling comprises one of following:
a paging message;
system information; and
downlink scheduling signaling.

6. The paging method according to claim 5, wherein the determining, by the terminal, a paging cause of the terminal based on the second list further comprises:
determining, by the terminal if the downlink signaling carries the first indication information, and the paging message does not carry the second list, that the network side device does not supports sending of a paging cause.

7. The paging method according to claim 1, wherein that the paging message carries or does not carry paging cause indication information comprises: the paging message carries at least one of a third list and a fourth list, wherein
each entry in the third list comprises a first paging ID of a paged terminal; and
each entry in the fourth list comprises a first paging ID of a paged terminal and paging cause indication information corresponding to the first paging ID, wherein
a first paging ID of a same paged terminal does not exist in both the third list and the fourth list.

8. The paging method according to claim 7, wherein the performing, by the terminal, a first operation based on the paging message comprises at least one of following:
determining, by the terminal if a first paging ID of the terminal successfully matches a first paging ID comprised in a P-th entry in the third list, that a network side device does not support sending of a paging cause;
obtaining, if the first paging ID of the terminal successfully matches a first paging ID comprised in a P-th entry in the fourth list, paging cause indication information comprised in the P-th entry in the fourth list, to determine a paging cause of the terminal; and
determining, if the first paging ID of the terminal fails to match a first paging ID comprised in any entry in the third list and the fourth list, that the terminal is not paged, wherein
P is a positive integer greater than or equal to 1.

9. The paging method according to claim 8, wherein the obtaining paging cause indication information comprised in the P-th entry in the fourth list, to determine a paging cause of the terminal, comprises:
determining the paging cause of the terminal based on the paging cause indication information if the paging cause indication information comprised in the P-th entry in the fourth list is carried; or
if the paging cause indication information comprised in the P-th entry is not carried, performing one of following: determining the paging cause of the terminal based on a protocol agreement; and determining that the paging cause indication information corresponding to the terminal is the same as paging cause indication information corresponding to a previous entry that explicitly carries or carries paging cause indication information.

10. The paging method according to claim 4 or 9, wherein the determining the paging cause of the terminal based on a protocol agreement comprises:
determining that the paging cause of the terminal is a paging triggered by a non-voice service or another paging cause complementary to a paging cause defined in a protocol.

11. The paging method according to claim 1, wherein the paging cause indication information is generated based on an encryption input parameter, wherein the encryption input parameter comprises at least one of following:
all or some user equipment identifiers UE IDs of the paged terminal;
a key shared by a network side device and the paged terminal; and
a paging cause or paging cause indication information of the paged terminal before encryption, wherein
the performing, by the terminal, a first operation based on the paging message comprises:
obtaining, by the terminal, paging cause indication information corresponding to the terminal; and
decrypting the paging cause indication information, to obtain a paging cause of the terminal.

12. The paging method according to claim 11, wherein after the performing a first operation, the method further comprises at least one of following:
determining, by the terminal if the terminal detects that the paging cause indication information or the paging cause is an unexpected value, that the paging cause indication information or the paging cause is invalid;
reporting, by the terminal, first information to the network side device if the terminal detects that the paging cause indication information or the paging cause is an unexpected value; and
receiving, by the terminal, a security parameter sent by the network side device for subsequent decryption of a paging cause, wherein
the first information indicates at least one of following:
that an unexpected paging cause or unexpected paging cause indication information is received; and
a cell identifier that receives the unexpected paging cause or the unexpected paging cause indication information.

13. The paging method according to claim 2 or 7, wherein the second list or the fourth list comprises at least one of following:
a length field; and
an Entry field, wherein
the length field indicates a total number of entries comprised in the second list or the fourth list, and the Entry field carries or does not carry the paging cause indication information of the terminal, wherein
when the paging cause indication information is carried, it indicates that the terminal is paged due to a carried paging cause; or
when the paging cause indication information is not carried, one of following is comprised:
the paging cause of the terminal is a paging cause agreed on in a protocol; and
the paging cause indication information of the terminal is the same as paging cause indication information corresponding to a previous entry that carries paging cause indication information.

14. The paging method according to claim 1, wherein that the paging message carries or does not carry paging cause indication information comprises at least one of following:
the paging message carries a second paging ID allocated by a network side device to the paged terminal that needs or supports receiving of a paging cause;
the paging message carries a third paging ID corresponding to the paged terminal that needs or supports receiving of a paging cause, wherein the third paging ID is obtained based on at least one of a first paging ID of the paged terminal and a deducing manner agreed on in a protocol; and
the paging message is scheduled by a PDCCH scrambled by using an RNTI corresponding to a paging cause, wherein RNTIs corresponding to different paging causes are explicitly indicated by a network side device or obtained in the deducing manner agreed on in the protocol.

15. The paging method according to claim 14, wherein the performing, by the terminal, a first operation based on the paging message comprises at least one of following:
determining, by the terminal, the paging cause based on the second paging ID;
determining, by the terminal, the paging cause based on the third paging ID; and
determining, by the terminal, the paging cause based on the RNTI.

16. The paging method according to claims 1 to 15, wherein before the receiving, by a terminal, a paging message, the method further comprises:
reporting, by the terminal, second information to the network side device, wherein the second information indicates that the terminal needs or supports receiving of a paging cause, or that the terminal does not need or support receiving of a paging cause.

17. A paging method, comprising:
sending, by a network side device, a paging message to a terminal, wherein the paging message carries or does not carry paging cause indication information, wherein the paging cause indication information indicates a paging cause corresponding to a paged terminal that needs or supports receiving of a paging cause.

18. The paging method according to claim 17, wherein that the paging message carries or does not carry paging cause indication information comprises: the paging message carries a first list, or the paging message carries a first list and a second list, wherein
each entry in the first list comprises a first paging ID of a paged terminal;
each entry in the second list comprises paging cause indication information of a paged terminal; and
a sequence of paging cause indication information of paged terminals in the second list corresponds to a sequence of first paging IDs of first M or last M paged terminals in the first list, wherein M is a total number of entries comprised in the second list.

19. The paging method according to claim 17, wherein that the paging message carries or does not carry paging cause indication information comprises: the paging message carries at least one of a third list and a fourth list, wherein
each entry in the third list comprises a first paging ID of a terminal; and
each entry in the fourth list comprises a first paging ID of a terminal and paging cause indication information corresponding to the first paging ID, wherein
a first paging ID of a same paged terminal does not exist in both the third list and the fourth list.

20. The paging method according to claim 17, wherein the paging cause indication information is generated based on an encryption input parameter, wherein the encryption input parameter comprises at least one of following:
all or some user equipment identifiers UE IDs of the paged terminal;
a key shared by the network side device and the paged terminal; and
a paging cause or paging cause indication information of the paged terminal before encryption.

21. The paging method according to claim 20, wherein the method further comprises at least one of following:
receiving, by the network side device, first information sent by the terminal; and
sending, by the network side device to the terminal, a security parameter for subsequent decryption of the paging cause, wherein
the first information indicates at least one of following:
that an unexpected paging cause or unexpected paging cause indication information is received; and
a cell identifier that receives the unexpected paging cause or the unexpected paging cause indication information.

22. The paging method according to claim 18 or 19, wherein the second list or the fourth list comprises at least one of following:
a length field; and
an Entry field, wherein
the length field indicates a total number of entries comprised in the second list or the fourth list, and the Entry field carries or does not carry the paging cause indication information of the terminal, wherein
when the paging cause indication information is carried, it indicates that the terminal is paged due to a carried paging cause; or
when the paging cause indication information is not carried, one of following is comprised:
the paging cause of the terminal is a paging cause agreed on in a protocol; and
the paging cause indication information of the terminal is the same as paging cause indication information corresponding to a previous entry that carries paging cause indication information.

23. The paging method according to claim 17, wherein the method further comprises:
sending, by the network side device, downlink signaling to the terminal, wherein the downlink signaling carries or does not carry first indication information, and the first indication information indicates that the paging message supports carrying of a paging cause, wherein
the downlink signaling comprises one of following:
a paging message;
system information; and
downlink scheduling signaling.

24. The paging method according to claim 17, wherein that the paging message carries or does not carry paging cause indication information comprises at least one of following:
the paging message carries a second paging ID allocated by a network side device to the paged terminal that needs or supports receiving of a paging cause;
the paging message carries a third paging ID corresponding to the paged terminal that needs or supports receiving of a paging cause, wherein the third paging ID is obtained by the network side device based on at least one of a first paging ID of the paged terminal and a deducing manner agreed on in a protocol; and
the paging message is scheduled by a PDCCH scrambled by using an RNTI corresponding to a paging cause, wherein RNTIs corresponding to different paging causes are explicitly indicated by the network side device or obtained in the deducing manner agreed on in the protocol.

25. The paging method according to claim 17 to 24, wherein the method further comprises:
receiving, by the network side device, second information reported by the terminal, wherein the second information indicates that the terminal needs or supports receiving of a paging cause, or that the terminal does not need or support receiving of a paging cause.

26. A paging apparatus, comprising:
a first receiving unit, configured to receive a paging message, wherein the paging message carries or does not carry paging cause indication information, wherein the paging cause indication information indicates a paging cause corresponding to a paged terminal that needs or supports receiving of a paging cause; and
a first processing unit, configured to perform a first operation based on the paging message.

27. The paging apparatus according to claim 26, wherein that the paging message carries or does not carry paging cause indication information comprises: the paging message carries a first list, or the paging message carries a first list and a second list, wherein
each entry in the first list comprises a first paging ID of a paged terminal;
each entry in the second list comprises paging cause indication information of a paged terminal; and
a sequence of paging cause indication information of paged terminals in the second list corresponds to a sequence of first paging IDs of first M or last M paged terminals in the first list, wherein M is a total number of entries comprised in the second list.

28. The paging apparatus according to claim 27, wherein the first processing unit is configured to:
determine, based on the first list, whether a terminal is paged; and
determine, if the terminal is paged, a paging cause of the terminal based on the second list, wherein
that whether the terminal is paged is determined comprises at least one of following:
determining, if a first paging ID of the terminal successfully matches a first paging ID comprised in an N-th or a last N-th entry in the first list, that the terminal is paged, wherein N is a positive integer greater than or equal to 1 and less than or equal to a total number of entries comprised in the first list; and
determining, if the first paging ID of the terminal fails to match a first paging ID comprised in any entry in the first list, that the terminal is not paged, wherein
that the paging cause of the terminal is determined based on the second list comprises at least one of following:
obtaining paging cause indication information corresponding to an N-th or a last N-th entry in the second list, to determine the paging cause of the terminal; and
determining, if a total of entries comprised in the second list is less than N, that a network side device does not support sending of a paging cause.

29. The paging apparatus according to claim 28, wherein the obtaining paging cause indication information corresponding to an N-th or a last N-th entry in the second list, to determine the paging cause of the terminal, comprises at least one of following:
determining, if the paging cause indication information corresponding to the N-th or the last N-th entry in the second list is carried, the paging cause of the terminal based on the paging cause indication information; and
performing, if the paging cause indication information corresponding to the N-th or the last N-th entry in the second list is not carried, one of following: determining, by the terminal, the paging cause of the terminal based on a protocol agreement; and determining that the paging cause indication information corresponding to the terminal is the same as paging cause indication information corresponding to a previous entry that carries paging cause indication information.

30. The paging apparatus according to claim 28, wherein the apparatus further comprises second processing unit, configured to:
receive downlink signaling, wherein the downlink signaling carries or does not carry first indication information, and the first indication information indicates that the paging message supports carrying of a paging cause, wherein
the terminal determines, if the downlink signaling does not carry the first indication information, that a current cell does not support sending of a paging cause; or
the terminal determines, if the downlink signaling carries the first indication information, that a current cell supports sending of a paging cause, wherein
the downlink signaling comprises one of following:
a paging message;
system information; and
downlink scheduling signaling.

31. The paging apparatus according to claim 28, wherein that the paging cause of the terminal is determined based on the second list further comprises:
determining, by the terminal if the downlink signaling carries the first indication information, and the paging message does not carry the second list, that a network side device does not supports sending of a paging cause.

32. The paging apparatus according to claim 26, wherein that the paging message carries or does not carry paging cause indication information comprises: the paging message carries at least one of a third list and a fourth list, wherein
each entry in the third list comprises a first paging ID of a paged terminal; and
each entry in the fourth list comprises a first paging ID of a paged terminal and paging cause indication information corresponding to the first paging ID, wherein
a first paging ID of a same paged terminal does not exist in both the third list and the fourth list.

33. The paging apparatus according to claim 32, wherein the first processing unit is configured to perform at least one of following:
determining, by the terminal if a first paging ID of the terminal successfully matches a first paging ID comprised in a P-th entry in the third list, a network side device does not support sending of a paging cause;
obtaining, if the first paging ID of the terminal successfully matches a first paging ID comprised in a P-th entry in the fourth list, paging cause indication information comprised in the P-th entry in the fourth list, to determine a paging cause of the terminal; and
determining, if a first paging ID of the terminal fails to match a first paging ID comprised in any entry in the third list and the fourth list, that the terminal is not paged, wherein
P is a positive integer greater than or equal to 1.

34. The paging apparatus to claim 33, wherein the obtaining paging cause indication information comprised in the P-th entry in the fourth list, to determine a paging cause of the terminal, comprises:
determining the paging cause of the terminal based on the paging cause indication information if the paging cause indication information comprised in the P-th entry in the fourth list is explicitly carried or carried; or
performing one of following if the paging cause indication information comprised in the P-th entry is implicitly carried or not carried: determining the paging cause of the terminal based on a protocol agreement; and determining that the paging cause indication information corresponding to the terminal is the same as paging cause indication information corresponding to a previous entry that explicitly carries or carries paging cause indication information.

35. The paging apparatus to claim 29 or 34, wherein the determining the paging cause of the terminal based on a protocol agreement comprises:
determining that the paging cause of the terminal is paging triggered by a non-voice service or another paging cause complementary to a paging cause defined in a protocol.

36. The paging apparatus to claim 26, wherein the paging cause indication information is generated based on an encryption input parameter, wherein the encryption input parameter comprises at least one of following:
all or some user equipment identifiers UE IDs of the paged terminal;
a key shared by a network side device and the paged terminal; and
a paging cause of the paged terminal before encryption, wherein
the first processing unit is configured to:
obtain paging cause indication information corresponding to the terminal; and
decrypt the paging cause indication information, to obtain the paging cause of the terminal.

37. The paging apparatus according to claim 36, further comprising a third processing unit, configured to perform at least one of following:
determining, if it is detected that the paging cause indication information or the paging cause is an unexpected value, that the paging cause indication information or the paging cause is invalid;
reporting first information to the network side device if it is detected that the paging cause indication information or the paging cause is an unexpected value; and
receiving a security parameter sent by the network side device for subsequent decryption of a paging cause, wherein
the first information indicates at least one of following:
that an unexpected paging cause or unexpected paging cause indication information is received; and
a cell identifier that receives the unexpected paging cause or unexpected paging cause indication information.

38. The paging apparatus according to 27 to 32, wherein the second list or the fourth list comprises at least one of following:
a length field; and
an Entry field, wherein
the length field indicates a total number of entries comprised in the second list or the fourth list, and the Entry field carries or does not carry the paging cause indication information of the terminal, wherein
when the paging cause indication information is carried, it indicates that the terminal is paged due to a carried paging cause; or
when the paging cause indication information is not carried, one of following is comprised:
the paging cause of the terminal is a paging cause agreed on in a protocol; and
the paging cause indication information of the terminal is the same as paging cause indication information corresponding to a previous entry that carries paging cause indication information.

39. The paging apparatus according to claim 26, wherein that the paging message carries or does not carry paging cause indication information comprises at least one of following:
the paging message carries a second paging ID allocated by a network side device to the paged terminal that needs or supports receiving of a paging cause;
the paging message carries a third paging ID corresponding to the paged terminal that needs or supports receiving of a paging cause, wherein the third paging ID is obtained based on at least one of a first paging ID of the paged terminal and a deducing manner agreed on in a protocol; and
the paging message is scheduled by a PDCCH scrambled by using an RNTI corresponding to a paging cause, wherein RNTIs corresponding to different paging causes are explicitly indicated by a network side device or obtained in the deducing manner agreed on in the protocol.

40. The paging apparatus according to claim 39, wherein the first processing unit is configured to perform at least one of following:
determining the paging cause based on the second paging ID;
determining the paging cause based on the third paging ID; and
determining the paging cause based on the RNTI.

41. The paging apparatus according to claim 26 to 40, further comprising:
a first sending unit, configured to report second information to the network side device, wherein the second information indicates that the terminal needs or supports receiving of a paging cause, or that the terminal does not need or support receiving of a paging cause.

42. A paging apparatus, comprising:
a second sending unit, configured to send a paging message to a terminal, wherein the paging message carries or does not carry paging cause indication information, wherein the paging cause indication information indicates a paging cause corresponding to a paged terminal that needs or supports receiving of a paging cause.

43. The paging apparatus according to claim 42, wherein that the paging message carries or does not carry paging cause indication information comprises: the paging message carries a first list, or the paging message carries a first list and a second list, wherein
each entry in the first list comprises a first paging ID of a paged terminal;
each entry in the second list comprises paging cause indication information of a paged terminal; and
a sequence of paging cause indication information of paged terminals in the second list corresponds to a sequence of first paging IDs of first M or last M paged terminals in the first list, wherein M is a total number of entries comprised in the second list.

44. The paging apparatus according to claim 42, wherein that the paging message carries or does not carry paging cause indication information comprises: the paging message carries at least one of a third list and a fourth list, wherein
each entry in the third list comprises a first paging ID of a terminal; and
each entry in the fourth list comprises a first paging ID of a terminal and paging cause indication information corresponding to the first paging ID, wherein
a first paging ID of a same paged terminal does not exist in both the third list and the fourth list.

45. The paging apparatus to claim 42, wherein the paging cause indication information is generated based on an encryption input parameter, wherein the encryption input parameter comprises at least one of following:
all or some user equipment identifiers UE IDs of the paged terminal;
a key shared by the network side device and the paged terminal; and
a paging cause or paging cause indication information of the paged terminal before encryption.

46. The paging apparatus according to claim 45, further comprising: a fourth processing unit, configured to perform at least one of following:
receiving first information sent by the terminal; and
sending, to the terminal, a security parameter for subsequent decryption of the paging cause, wherein
the first information indicates at least one of following:
that an unexpected paging cause or unexpected paging cause indication information is received; and
a cell identifier that receives the unexpected paging cause or the unexpected paging cause indication information.

47. The paging apparatus according to 43 or 44, wherein the second list or the fourth list comprises at least one of following:
a length field; and
an Entry field, wherein
the length field indicates a total number of entries comprised in the second list or the fourth list, and the Entry field carries or does not carry the paging cause indication information of the terminal, wherein
when the paging cause indication information is carried, it indicates that the terminal is paged due to a carried paging cause; and
When that the paging cause indication information is not carried, one of following is comprised:
the paging cause of the terminal is a paging cause agreed on in a protocol; and
the paging cause indication information of the terminal is the same as paging cause indication information corresponding to a previous entry that carries paging cause indication information.

48. The paging apparatus according to claim 42, further comprising:
a third sending unit, configured to send downlink signaling to the terminal, wherein the downlink signaling carries or does not carry first indication information, and the first indication information indicates that the paging message supports carrying of a paging cause, wherein
the downlink signaling comprises one of following:
a paging message;
system information; and
downlink scheduling signaling.

49. The paging apparatus according to claim 42, wherein that the paging message carries or does not carry paging cause indication information comprises at least one of following:
the paging message carries a second paging ID allocated by a network side device to each paged terminal that needs or supports receiving of a paging cause;
the paging message carries a third paging ID corresponding to each paged terminal that needs or supports receiving of a paging cause, wherein the third paging ID is obtained by the network side device based on at least one of a first paging ID of the paged terminal and a deducing manner agreed on in a protocol; and
the paging message is scheduled by a PDCCH scrambled by using an RNTI corresponding to a paging cause, wherein RNTIs corresponding to different paging causes are explicitly indicated by the network side device or obtained in a deducing manner agreed on in a protocol.

50. The paging apparatus according to claim 42 to 49, further comprising:
a second receiving unit, configured to receive second information reported by the terminal, wherein the second information indicates that the terminal needs or supports receiving of a paging cause, or that the terminal does not need or support receiving of a paging cause.

51. A terminal, comprising a processor, a memory, and a program or instructions stored in the memory and executable on the processor, wherein when the program or the instructions are executed by the processor, the steps of the paging method according to any one of claims 1 to 16 are implemented.

52. A network side device, comprising a processor, a memory, and a program or instructions stored in the memory and executable on the processor, wherein when the program or the instructions are executed by the processor, the steps of the paging method according to any one of claims 17 to 25 are implemented.

53. A readable storage medium, wherein the readable storage medium stores a program or instructions, and when the program or the instructions are executed by the processor, the paging method according to any one of claims 1 to 16 or the steps of the paging method according to any one of claims 17 to 25 are implemented.

54. A chip, wherein the chip comprises a processor and a communication interface, the communication interface is coupled to the processor, the processor is configured to run a program or instructions, to implement the paging method according to any one of claims 1 to 16, or to implement the steps of the paging method according to any one of 17 to 25.

55. A computer program/program conduct, wherein the computer program/program product is stored in a non-volatile storage medium, and the program/program conduct is executed by at least one processor, to implement the paging method according to any one of claims 1 to 16, or to implement the steps of the paging method according to any one of claims 17 to 25.
